# EUROPÄISCHE PATENTSCHRIFT

(11) **EP 1 727 315 B1**
(45) Veröffentlichungstag und Bekanntmachung des Hinweises auf die Patenterteilung: **27.02.2008**
(21) Anmeldenummer: 05011503.9
(22) Anmeldetag: 27.05.2005
(51) Int. Cl.: H04L 12/56

(54) **Verfahren und Vorrichtung zum nach ATM-Kanälen geordneten Bereitstellen von ATM-Zellen an einer zwischen einem ersten und einem zweiten Knoten eines Übertragungssystems angeordneten Schnittstelle**
Method and apparatus to provide ATM cells ordered according to ATM channels in an interface of a communication sytem placed between a first and a second node
Procédé et Dispositif pour mettre à disposition des cellules ATM ordonnés selon des canaux ATM dans une interface d' un système de communication disposé entre un premier et un deuxième noeud

(43) Veröffentlichungstag der Anmeldung: 29.11.2006
(60) Teilanmeldung: 06011246.3
(73) Patentinhaber: Tektronix International Sales GmbH, 8212 Neuhausen (CH)
(72) Erfinder: Brinner, Helge, 14057 Berlin (DE)
(74) Vertreter: Schurack, Eduard F.

(56) Entgegenhaltungen:
- US-A1- 2002 054 600
- US-A1- 2002 141 395
- US-B1- 6 603 766
- US-B1- 6 788 691

## Beschreibung

Die vorliegende Erfindung betrifft generell die ATM (Asynchronous Transfer Mode)-Übertragung. Sie betrifft insbesondere ein Verfahren und eine Vorrichtung zum Ermitteln mindestens eines Übertragungsparameters an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanälen stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird, wobei in jeder ATM-Zelle eine Adressinformation mit zumindest einem ersten Adressidentifikator übertragen wird, die die Zugehörigkeit zu einem bestimmten ATM=Kanal anzeigt, und wobei die ATM-Zelle gemäß einer bestimmten Kodierungsvorschrift für den ATM Adaption Layer aus einer vorgebbaren Anzahl von Kodierungsvorschriften für den ATM Adaption Layer kodiert ist, wobei folgende Schritte ausgeführt werden: Zunächst wird für eine bestimmte ATM-Zelle die Adressinformation ermittelt. Dann wird anhand einer Tabelle, in der jede Adressinformation auf eine Kanalkennung abgebildet ist, überprüft, ob die Adressinformation bereits in der Tabelle erfasst ist. Ist dies der Fall, wird der ATM-Zelle für die Weiterverarbeitung die Kanalkennung gemäß der Tabelle zugewiesen. Ist die Adressinformation in der Tabelle noch nicht erfasst, wird eine freie Kanalkennung an die Adressinformation zugewiesen, die zur Kodierung der ATM-Zelle verwendete Kodierungsvorschrift ermittet und diese Kanalkennung, die Adressinformation und die Kodierungsvorschrift in der Tabelle erfasst.

Anschließend werden die ATM-Zellen geordnet nach Kanalkennungen für eine Weiterverarbeitung bereitgestellt.

Grundsätzlich werden in ATM-Systemen die Daten in Zellen von einer Länge von 53 Byte übertragen, wobei 5 Byte für den Header reserviert sind und 48 Byte für die Payload. Jede Zelle hat eine Adressinformation, die zwei Adressidentifikatoren umfasst, nämlich die VPI (Virtual Path Identifier) und die VCI (Virtual Channel Identifier). Des weiteren umfasst der Zell-Header einen Payload Type Identifier PTI, der drei Bits umfasst. Gemäß dem OSI-Referenzmodell ist eine Schicht vorgesehen, nämlich der so genannte ATM-Adaption-Layer (AAL), der den Transport größerer Datenpakete regelt. Dabei werden zwei unterschiedliche Kodiervorschriften verwendet, nämlich AAL2 und AAL5.

Dokument US 6 603 766 beschreibt diese Kodiervorschriften.

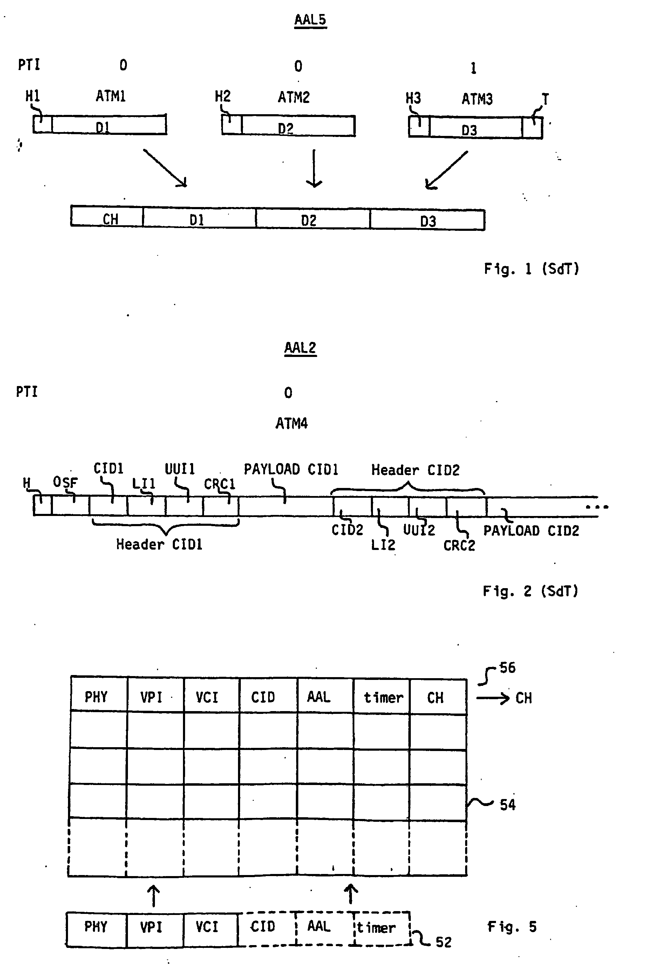

Figur 1 zeigt beispielhaft den bekannten Aufbau von ATM-Zellen bei AAL5: Jede ATM-Zelle ATM1, ATM2, ATM3 weist einen Header H1, H2, H3 und eine Payload D1, D2, D3 auf. Die letzte Zelle einer Übertragung weist überdies einen Trailer T auf. Diese letzte Zelle ist bei AAL5 durch den Payload Type Identifier "001" oder "011" gekennzeichnet. Bei allen anderen Zellen hat der Payload Type Identifier bei AAL5 den Wert "000" oder "010". Die ATM-Zellen ATM1, ATM2, ATM3, die zum selben ATM-Kanal gehören, werden nach Kanälen geordnet zusammengefügt, siehe Figur 1. Bei AAL5 wird demnach alle Information mit derselben VPI/VCl-Adresse einem ATM-Kanal CH zugehörig bezeichnet.

Im Falle von AAL2 kann ein Kanal mit derselben VPI/VCI-Adresse bis zu 255 Subkanäle enthalten, die mit so genannten CIDs (Channel Identifier) gekennzeichnet sind. Subkanäle mit unterschiedlichen CIDs betreffen die Übertragung von Informationen für unterschiedliche Teilnehmer. Mit Bezug auf Figur 2 ist der Payload Type-Identifier PTI für jede ATM-Zelle ATM4 bei AAL2 gleich "000". Die dargestellte ATM-Zelle ATM4 weist zunächst einen Header auf, dem ein OSF (Offset-Feld) folgt. Das Offset-Feld gibt an, wo die erste CID, vorliegend die CID1, positioniert ist. Dies ist deshalb nötig, da CIDs zellenübergreifend sein können. Auf die CID1 folgt das Feld LI1, das die Länge der ersten Payload "Payload CID1" angibt. Dann folgt das Feld UUI1 sowie das Feld CRC1, das das Ergebnis eines Cyclic-Redundancy-Checks, d. h. einer zyklischen Blockprüfung, über den Header der CID1, der Felder CID1, LI1, UUI1 und CRC1 enthält, wiedergibt. Nach der Payload CID1 folgt der Header der CID2 mit den Feldern CID2, LI2, UUI2, CRC2. Daran schließt sich die Payload CID2 an, usw.

Im Sinne der nachfolgenden Erfindung werden auch Kanäle mit derselben VPI/VCI/CID-Adresse als ATM-Kanäle bezeichnet.

Welche Koeiervorschrift für die Übertragung verwendet wird, bestimmt im UMTS-Netz beispielsweise der Knoten RNC, je nach dem, welche Anforderung von einem Teilnehmer, beispielsweise einem Handy, insbesondere Sprachübertragung oder Übertragung von Daten aus dem Internet, an ihn gerichtet wurde. Ein Monitoringgerät, das der Überwachung an der Schnittstelle dient, bekommt daher ohne Auffinden, Konfiguren und Dekodieren der Kanäle, auf denen Steuerungsinformationen (Control Plane Daten) übertragen werden, die vereinbarte Kodiervorschrift nicht mit.

Im Stand der Technik erfordern daher Messgeräte, insbesondere zum Monitoren von Übertragungen auf ATM-Kanälen an einer zwischen einem ersten und einem zweiten Knoten eines Übertragungssystems angeordneten Schnittstelle, die manuelle Konfiguration der ATM-Kanäle. Dabei wird der Benutzer aufgefordert, manuell die VPI/VCI-Adressen und den zugehörigen AAL-Typ des Kanals einzugeben, den er monitoren will. Im Falle von AAL2 müssen darüber hinaus auch alle CIDs manuell konfiguriert werden.

Zur Überprüfung, ob die Adresskombination der aktuellen ATM-Zelle bereits in der Tabelle erfasst ist, werden im Stand der Technik Tabellensuchalgorithmen verwendet, die einen äußerst schnellen und damit sehr teuren RAM-Speicher sowie eine hohe Prozessorleistung voraussetzen, da der Algorithmus für die Suche selbst in Software formuliert ist.

Diese manuelle Konfiguration weist zwei wesentliche Nachteile auf: Eine einmal vorgenommene manuelle Konfiguration ist fest. Eine Anpassung an Änderungen in der Konfiguration der Schnittstelle, die der Benutzer monitort, beispielsweise beim Öffnen neuer Kanäle und beim Schließen vorhandener Kanäle, wird nicht vorgenommen. Weiterhin weiß der Benutzer in den meisten Fällen nicht, welche ATM-Kanäle an der Schnittstelle, die gemonitort werden soll, vorhanden sind. Mit der zeitaufwändigen und fehlerbehafteten manuellen Konfiguration ist es nicht möglich, Kanäle an der Schnittstelle zu monitoren, deren VPI/VCI-Adressen dem Benutzer nicht bekannt sind.

Die allgemeine Aufgabe der vorliegenden Erfindung besteht deshalb darin, die Nachteile des Stands der Technik zu überwinden und ein Verfahren bzw. eine Vorrichtung bereitzustellen, das/die das Monitoren benutzerfreundlicher macht, die Gefahr von Falscheingaben minimiert sowie ein verbessertes Monitoren ermöglicht.

Die grundsätzliche Lösung dieser Aufgabe besteht darin, das eingangs genannte Verfahren bzw. eine entsprechende Vorrichtung derart weiterzubilden, dass dadurch eine permanente Autokonfiguration und damit eine permanente Überwachung der ATM-Kanäle an der Schnittstelle ermöglicht wird.

Die grundsätzliche Lösung gemäß der vorliegenden Erfindung kann in drei unterschiedliche Lösungsaspekte unterteilt werden: 1. Maßnahmen zur Erzielung der für ein permanentes Monitoring benötigten hohen Verarbeitungsgeschwindigkeit zum nach ATM-Kanälen geordneten Bereitstellen von ATM-Zellen; 2. Maßnahmen zur Autokonfiguration; und 3. Maßnahmen, die ein nach ATM-Kanälen geordnetes permanentes Bereitstellen von ATM-Zellen selbst bei begrenzten Speichermöglichkeiten, ermöglichen.

Der erste Teilaspekt wird gelöst durch ein Verfahren und eine Vorrichtung wie sie in der EP 1 727 320 A1 beansprucht sind.

Die Lösung basiert auf der Erkenntnis, dass die nötige Verarbeitungsgeschwindigkeit erreicht werden kann, wenn ein CAM (Content Addressable Memory)-Speicher verwendet wird und als Dateneingangssignal die Adressinformation der gerade zur Auswertung anliegenden ATM-Zelle an den CAM-Speicher angelegt wird, wobei der CAM-Speicher so organisiert ist, dass er dann als Adressausgangssignal die Kanalkennung, sofern vorhanden, bereitstellt.

Ein CAM-Speicher mit speziellen Funktionsblöcken, insbesondere zusätzlichen Maskenregistern und einer direkten SRAM-Schnittstelle, die verwendet werden kann, um einen Index als direkten Zeiger zur Adressierung des SRAMs zu verwenden, wird als NSE (Network Search Engine = Netzwerksuchmaschine) bezeichnet. Eine NSE der Firma IDT vom Typ 75N42102 ermöglicht beispielsweise 80 Millionen Abfragen pro Sekunde. Um eine derart hohe Anzahl an Abfragen überhaupt zu ermöglichen, ist bei einer bevorzugten Ausführungsform vorgesehen, dass am Ein- und Ausgang des CAM-Speichers Zustandsmaschinen gekoppelt sind. Demnach wird in Schritt b) zur Erzeugung einer Anfrage, bei der das Daten-Eingangssignal an den CAM-Speicher gekoppelt wird, eine Hauptzustandsmaschine verwendet und in Schritt b1) und in Schritt b2) zur Erfassung des Ergebnisses der Anfrage eine Ergebnis-Zustandsmaschine verwendet.

Bei dem genannten Baustein der Firma IDT kann, sofern die Hauptzustandsmaschine, der CAM-Speicher und die Ergebniszustandsmaschine miteinander auf ein gemeinsames Taktsignal synchronisiert sind, von der Hauptzustandsmaschine maximal eine Anfrage pro zwei Taktzyklen erzeugt und zur Verarbeitung an den CAM-Speicher angelegt werden, wobei der CAM-Speicher für die Verarbeitung einer Anfrage neun Taktzyklen benötigt, d. h. dass es neun Taktzyklen dauert, bis das Ergebnis an der Ergebniszustandsmaschine bereitgestellt wird. Gemäß einer bevorzugten Ausführungsform ist daher vorgesehen, dass die Ergebniszustandsmaschine die vom CAM-Speicher bereitgestellten Ergebnisse sammelt, damit sie den entsprechenden Anfragen der Hauptzustandsmaschine zugewiesen werden können. Durch diese Maßnahme lässt sich die maximale Verarbeitungsgeschwindigkeit des CAM-Speichers umsetzen, ohne dass nach einer Anfrage zunächst neun Taktzyklen gewartet werden müsste, bis das Ergebnis an der Ergebniszustandsmaschine bereitgestellt würde, bevor die nächste Anfrage von der Hauptzustandsmaschine an den CAM-Speicher gerichtet werden könnte.

Der zweitgenannte Teilaspekt wird gelöst durch ein Verfahren mit den Merkmalen von Patentanspruch 1 und eine Vorrichtung mit den Merkmalen von Patentanspruch 5.

Dieser Aspekt betrifft demnach die Ermittlung mindestens eines Übertragungsparameters einer ATM-Übertragung und basiert auf der Erkenntnis, dass für die grundsätzliche Entscheidung, ob eine AAL2- oder AAL5-Übertragung vorliegt, der Payload-Type-Identifier in Verbindung mit einem nur von AAL2 erfülltem Kriterium ausgewertet werden kann. Damit ist die Basis für eine Autokonfiguration eines Monitoringgeräts geschaffen.

Als Kriterium, das dabei zu prüfen ist, kommt eines oder kommen mehrere aus folgender Auswahl in Betracht: der CRC5-Check (d.h. die zyklische Blockprüfung) über die erste, durch das OSF-Feld bestimmte CID ist gültig; der Paritäts-Check über das OSF-Feld ist gültig; der Wert des UUI-Felds der ersten CID ist kleiner als 27; das erste CID-Feld ist nicht gleich 0x00.

Eine besonders bevorzugte Ausführungsform zeichnet sich dadurch aus, dass, wenn das zumindest eine Kriterium für AAL2 erfüllt ist, anschließend die CIDs ermittelt werden. Dazu wird das OSF-Feld der aktuellen ATM-Zelle ausgelesen. Danach wird gemäß der durch das OSF-Feld bestimmten Position innerhalb der Zelle die erste CID gelesen und im Anschluss daran das erste LI-Feld. Unter Verwendung des LI-Felds und der Position innerhalb der Zelle wird ein Offset-Wert ermittelt, der es ermöglicht, die zweite CID auszulesen. Sofern diese CID vorhanden ist (Wert ungleich 0), wird der nächste Offset-Wert ermittelt. Anschließend wird die nächste CID ausgelesen. Diese Schritte werden wiederholt, bis alle CID-Felder erfasst sind.

Bei AAL5 wird zusammen mit dem zugehörigen AAL-Typ und der zugewiesenen Kanalkennung jede Kombination aus VPI/VCI-Adresse in der Tabelle gemäß dem ersten Lösungsaspekt eingetragen. Optional kann auch ein Timer-Wert betreffend ein Zeitsignal zugeordnet werden. Bei AAL2 wird darüber hinaus jeder Kombination aus VPI/VCI/CID-Adresse der Tabelle gemäß dem ersten Lösungsaspekt eine Kanalkennung zugewiesen, wobei auch hier der zugehörige AAL-Typ und optional ein zugehöriger Timer-Wert abgespeichert werden. Zur Funktion eines solchen Timer-Werts wird auf die Ausführungen weiter unten verwiesen.

Der dritte Teilaspekt wird gelöst durch ein Verfahren und eine Vorrichtung wie sie in der EP 1 727 319 A1 beansprucht sind.

Diese Lösung basiert auf der Erkenntnis, dass dies bei einem gattungsgemäßen Verfahren optimal gelöst werden kann, wenn ein zyklischer Zähler verwendet wird, der jeweils nach einer vorgebbaren Zeitdauer einen Zeitschritt weiterzählt, wobei in der Tabelle zusammen mit der Kanalkennung und der Adressinformation der zugehörige Zählerstand der Erfassung der betreffenden Kanalkennung und Adressinformation bzw. deren letztes Update abgelegt wird. Damit wird die Möglichkeit bereitgestellt, dass die ältesten Einträge, die ja bei einem zyklischen Zähler eine bestimmten Zählerstand aufweisen, nämlich den aktuellen Zählerstand minus 1, abgefragt und gelöscht werden können. Wird die vorgebbare Zeitdauer so gewählt, dass von der Zeitdauer her alle in Betracht kommenden Übertragungen im Hinblick auf den Wertebereich des Zählerstands des zyklischen Zählers erfasst werden können, kann somit sichergestellt werden, dass trotz einer ihrem Umfang nach physikalisch begrenzten Tabelle ein permanentes Monitoren einer ATM-Übertragung an der Schnittstelle ermöglicht wird.

Besonders vorteilhaft lässt sich das Verfahren umsetzen, wenn zur Realisierung der Tabelle ein CAM-Speicher verwendet wird. Noch vorteilhafter ist es, wenn der CAM-Speicher in eine NSE eingebunden ist, da dadurch Möglichkeiten bereitgestellt werden eine Maske zu kreieren, mit der die gewünschten Werte des Zählerstands an den CAM-Speicher zur Abfrage erzeugt werden können.

Bevorzugt wird zum Löschen der Einträge mit einem bestimmten Zählerstand folgendermaßen vorgegangen: Zunächst wird eine Abfragemaske für den CAM-Speicher erzeugt, die zumindest den bestimmten Zählerstand enthält. Dann werden alle Einträge mit dem bestimmten Zählerstand im CAM-Speicher aufgefunden und anschließend all diese Einträge gelöscht. Insbesondere in Verbindung mit einer eingangsseitig angeordneten Zustandsmaschine lassen sich daher über ein Minimum an Taktzyklen eines Takts, auf den eine derartige am Eingang angeordnete Zustandsmaschine und der CAM-Speicher synchronisiert sind, die entsprechenden Kanäle aus der Tabelle löschen.

Die im Zusammenhang mit dem erfindungsgemäßen Verfahren vorgestellten Vorteile und bevorzugten Ausführungsformen gelten in entsprechender Weise für die erfindungsgemäße Vorrichtunge. Es ist besonders darauf hinzuweisen, dass das erfindungsgemäße Verfahren und die erfindungsgemäße Vorrichtung, insbesondere auch die jeweils bevorzugten Ausführungsformen, beliebig mit den im Zusammenhang mit dem ersten und dem dritten Lösungsaspekt beschriebenen Verfahren und Vorrichtungen kombiniert werden können.

Weitere vorteilhafte Ausführungsformen sind den Unteransprüchen zu entnehmen. Im Nachfolgenden wird nunmehr ein Ausführungsbeispiel der Erfindung unter Bezugnahme auf die beigefügten Zeichnungen näher beschrieben. Es zeigen:
- Figur 1: in schematischer Darstellung den aus dem Stand der Technik bekannten Aufbau einer auf einem ATM-Kanal unter Verwendung von AAL5 übertragenen Nachricht aus mehreren ATM-Zellen;
- Figur 2: in schematischer Darstellung den aus dem Stand der Technik bekannten Aufbau einer auf einem ATM-Kanal unter Verwendung von AAL2 übertragenen Nachricht aus mehreren ATM-Zellen;
- Figur 3: in Blockschaltbilddarstellung den Aufbau einer erfindungsgemäßen Vorrichtung;
- Figur 4: eine detailliertere schematische Darstellung eines Teilbereichs von Figur 3;
- Figur 5: eine schematische Darstellung einer Abfrage bei einer Ausführungsform eines erfindungsgemäßen Messgeräts, in der die Tabelle durch einen CAM-Speicher realisiert ist; und
- Figur 6: in schematischer Darstellung eine bei einer Ausführungsform eines erfindungsgemäßen Messgeräts verwendete Vorrichtung zur Bereitstellung eines Zeitsignals, das in der Tabelle abgelegt wird.

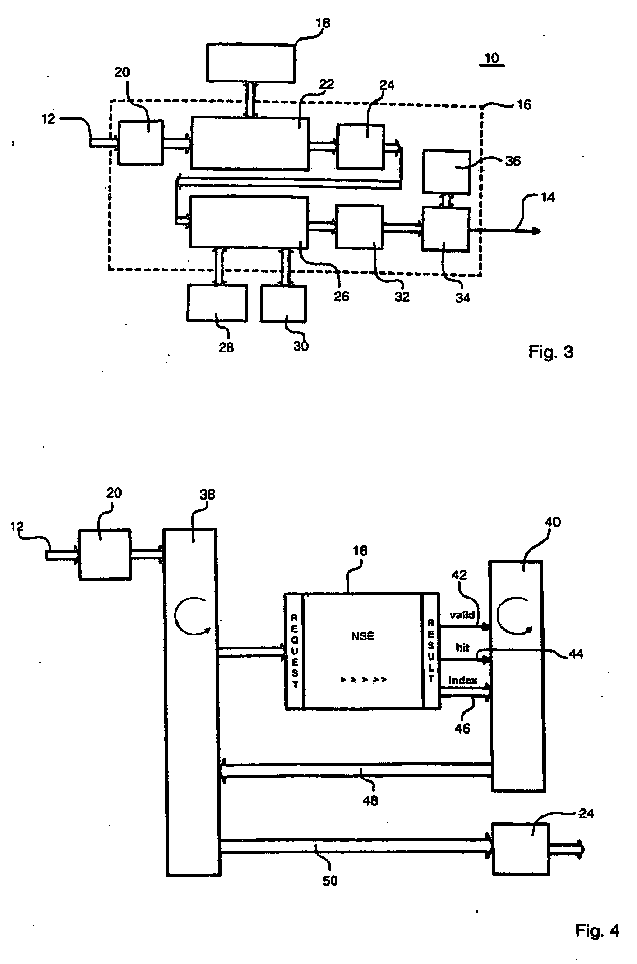

Figur 3 zeigt in schematischer Darstellung den für die vorliegende Erfindung relevanten Aufbau einer erfindungsgemäßen Vorrichtung. Dabei wird ein ATM-Datenstrom auf einer physikalischen Schnittstelle, beispielsweise UTOPIA-II, am Eingang 12 bereitgestellt. Wie mit Bezug auf Figur 5 noch genauer spezifiziert wird, wird vorliegend ein ATM-Datenstrom über vier verschiedene physikalische Schnittstellen PHY1 bis PHY4 bereitgestellt. Zur Bereitstellung von nach ATM-Kanälen geordneten Daten am Ausgang 14 der Vorrichtung 10 wirken im Wesentlichen zwei Komponenten zusammen, nämlich ein FPGA (Field Programmable Gate Array = frei programmierbares Verknüpfungsfeld) sowie eine NSE 18, die einen CAM-Speicher umfasst. Hierbei ist eine NSE eine spezialisierte Form eines CAM-Speichers. Während ein normales RAM (Random Access) an seinem Eingang adressiert wird und an seinem Ausgang die Daten bereitstellt, die unter dieser Adresse gespeichert sind, kann an einen CAM-Speicher eine Abfrage mit bekannten Daten angelegt werden, wobei der CAM-Speicher an seinem Ausgang die zugehörige Adresse bereitstellt, unter der diese Daten gespeichert sind. Diese Adresse wird im Nachfolgenden mit Index bezeichnet und gibt die Kanalkennung CH, d.h. den Kanal wieder, zu dem die ATM-Zelle gehört. Ein CAM-Speicher wird daher vorliegend zur Hardware-Implementierung eines Tabellensuchalgorithmus verwendet.

Ein DPR (Dual-Ported RAM) 20 dient der Bereitstellung von Daten an die eigentliche Autokonfigurationseinheit 22. Die Autokonfigurationseinheit 22 wirkt mit der NSE 18 zusammen, was genauer weiter unten mit Bezug auf Figur 4 beschrieben wird. Am Ausgang der Autokonfigurationseinheit 22 ist ein DPR 24 vorgesehen, der die ATM-Zellen bereitstellt, für die eine Zuordnung zu einem ATM-Kanal möglich gewesen ist. Diese werden an eine AAL-Reassembly-Vorrichtung 26 gekoppelt, die mit einem DDR-SDRAM (Synchronous Dynamic Random Access Memory) 28 und einem SRAM (Static Random Access Memory) 30 zur Durchführung des Reassemblys zusammenwirkt. Dabei sind im SRAM 30 Parameter für den Reassembly-Prozess abgelegt, während das DDR-SDRAM 28 die Pufferung der großen anfallenden Datenmengen beim Zusammenbau übernimmt. Über eine optionale Filtereinheit 32 werden die Daten an eine GBE (Gigabit Ethernet)-Schnittstelle 34 geleitet, die mit einem Power PC 36 zusammenwirkt, wobei am Ausgang 14 der GBE-Schnittstelle 34 die Daten nach Kanälen geordnet und derart konfiguriert bereitgestellt werden, dass sie auf einem Gigabit-Ethernet transportiert werden können. In der Filtereinheit 32 kann nach bestimmten Protokollinhalten, d. h. nach bestimmten Pattern gesucht werden, so dass nur diese am Ausgang 14 bereitgestellt werden. Dadurch, dass vorliegend die genannten Parameter des betreffenden Kanals direkt in der NSE hinterlegt werden, kann auf ein weiteres SRAM verzichtet werden.

Figur 4 zeigt in detaillierterer Darstellung einen Ausschnitt aus Figur 3. Dabei umfasst die Autokonfigurationsvorrichtung 22 eine Hauptzustandsmaschine 38 und eine Ergebniszustandsmaschine 40, die zur Durchführung der Autokonfiguration mit der NSE 18 zusammenwirkt. Bei einer NSE 18 handelt es sich um eine gepipelinete Vorrichtung, d. h. eine Vorrichtung, die zeitverschachtelt arbeitet. In einer speziellen Ausführungsform akzeptiert sie 80 Millionen Anfragen pro Sekunde, d. h. eine Anfrage alle zwei Taktzyklen eines gemeinsamen Taktsignals, während es neun Taktzyklen bedarf, bis das Ergebnis der Anfrage am Ausgang der NSE 18 bereitgestellt wird. Unter Verwendung von zwei Zustandsmaschinen muss nicht vor Anlegen einer erneuten Abfrage das Ergebnis der vorhergehenden Abfrage abgewartet werden. Vielmehr ist es möglich, dadurch die maximale Verarbeitungsgeschwindigkeit der NSE 18 auszunutzen. Gemäß der Darstellung von Figur 4 erzeugt die Hauptzustandsmaschine 38 alle Abfragen an die NSE im Abstand von zwei Taktzyklen. Die Ergebniszustandsmaschine 40 sammelt die Ergebnisse in der entsprechenden Reihenfolge. Dabei wird über die Leitung 42 ein Signal an die Ergebniszustandsmaschine 40 gelegt, welches die Ergebniszustandsmaschine 40 informiert, dass ein neues Ergebnis vorliegt. Über die Leitung 44 wird ein positives Signal an die Ergebniszustandsmaschine 40 geliefert, wenn die Abfrage erfolgreich war. Gleichzeitig wird über die Leitung 46 die Adresse des Eintrags an die Ergebniszustandsmaschine 40 geliefert. Ein gleichzeitiges positives Signal auf den Leitungen 42 und 44 informiert daher die Ergebniszustandsmaschine 40, dass das Ergebnis einer erfolgreichen Abfrage anliegt, ein positives Signal auf der Leitung 42 und ein negatives Signal auf der Leitung 44 informiert die Ergebniszustandsmaschine 40, dass die Abfrage nicht erfolgreich war, d.h. die abgefragten Daten nicht gefunden werden konnten. Über eine Leitung 48 stellt die Ergebniszustandsmaschine 40 die Ergebnisse der Abfrage an die Hauptzustandsmaschine 38 bereit. Die Hauptzustandsmaschine 38 erzeugt daraufhin für Abfragen, die nicht erfolgreich waren, d. h. keinen Treffer geliefert haben, neue Einträge in der NSE 18. Außerdem stellt die Hauptzustandsmaschine 38 die ATM-Zellen nach Kanälen geordnet, d. h. sowohl für Kanäle, die bereits in der NSE 18 vorhanden waren als auch für Kanäle, für die Neueinträge in der NSE 18 erzeugt werden mussten, über die Leitung 50 an den DPR 24 zur Weiterverarbeitung bereit.

### Zur detaillierten Funktion der Hauptzustandsmaschine 38:

### Für jede ATM-Zelle werden die folgenden Schritte ausgeführt:

- a): Zunächst wird beim DPR 20 nachgefragt, ob neue zur Verarbeitung anstehende ATM-Zellen vorliegen.
- b): Falls eine neue ATM-Zelle verfügbar ist, wird die Nummer des physikalischen Eingangsanschlusses PHY der Zelle erfasst und die Zelle mit einem Zeitstempel versehen;
- c): Anschließend wird ein HEC (Header Error Correction)-Check ausgeführt, wobei der CRC 8 über den Header der Zelle berechnet wird. Schlägt der HEC-Check fehl, wird die Zelle verworfen. Zellen mit fehlgeschlagenem HEC-Check und Zellen, die einen erfolgreichen HEC-Check absolviert haben, werden nach Eingangs-anschlüssen PHY gezählt.
- d): Dann wird der Zelle die Adressinformation VPI/VCI entnommen, wobei dies aufgrund der Synchronisation auf Zellenanfang und Zellenende ohne weiteres möglich ist.
- d1): Als nächstes wird eine Abfrage an die NSE für die gegenwärtige Kombination von PHY/VPI/VCI erzeugt.
- d2): Dann wird eine Abfrage an die NSE für die gegenwärtige Kombination von AALx erzeugt. Mit AALx wird hierbei bezeichnet, dass für diese Kombination von PHY/VPI/VCI der AAL noch nicht bekannt ist und deshalb, wie nachfolgend noch genauer dargestellt, ermittelt werden muss.
- d3): Dann wird eine Abfrage an die NSE für die gegenwärtige Kombination von PHY/VPI/VCI/AAL5 erzeugt.
- d4): Dann wird eine Abfrage an die NSE für die gegenwärtige Kombination von PHY/VPI/VCI/AAL2 erzeugt.
- d5): Schließlich wird eine Abfrage an die NSE für die gegenwärtige Kombination von PHY/VPI/VCI/AALy erzeugt. Mit AALy wird hierbei bezeichnet, dass für diese Kombination von PHY/VPI/VCI der AAL-Typ 5 angenommen und verwendet wird, aber noch nicht eindeutig erkannt ist.

- e): Anschließend wird Synchronisation mit der Ergebniszustandsmaschine hergestellt und die Ergebnisse der Abfragen d1 bis d4 empfangen.
- e1): Wenn die Abfrage für PHY/VPI/VCI nicht erfolgreich war, fahre fort mit Schritt f).
- e2): Falls ein Eintrag für PHY/VPI/VCI/AALx nicht gefunden wurde, fahre fort mit Schritt f).
- e3): Falls ein Eintrag für PHY/VPI/VCI/AAL5 gefunden wurde, fahre fort mit Schritt g).
- e4): Falls ein Eintrag für PHY/VPI/VCI/AAL2 gefunden wurde, fahre fort mit Schritt h).
- e5): Falls ein Eintrag für PHY/VPI/VCI/AALy nicht gefunden wurde, fahre fort mit Schritt i).

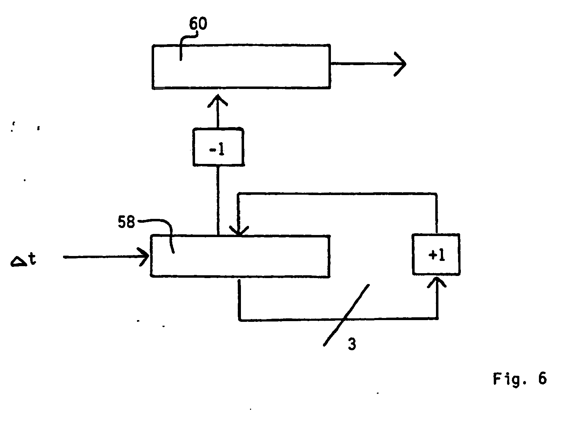

- f): Autokonfiguration:
- f1): Falls der Payload-Type-Identifier PTI gleich "001" oder "011" ist, wird ein CRC 32 Check über die gesamte Payload ausgeführt. Wird dieser CRC 32 Check erfolgreich absolviert, wird der Kanal als AAL5 klassifiziert. Schlägt dieser CRC 32 Check jedoch fehl, wird der Kanal als AALy klassifiziert. Falls ein neuer AAL5- oder AALy-Kanal gefunden wurde, wird ein neuer Eintrag in der NSE 18 kreiert. Dieser Eintrag umfasst eine neue Kanalkennung sowie das aktuelle Zeitsignal. Details zum Zeitsignal werden mit Bezug auf Figur 6 gegeben werden. Die Weiterverarbeitung erfolgt mit Schritt g).
- f2): Falls der Payload-Type-Identifier PTI gleich "000" ist, wird AAL2 angenommen und zumindest ein Kriterium für AAL2 überprüft:
- der CRC5-Check über die erste, durch das OSF-Feld bestimmte CID ist gültig;
- der Paritätscheck über das OSF-Feld ist gültig;
- der Wert des UUI-Felds der ersten CID ist kleiner als 27;
- das erste CID-Feld ist nicht gleich 0x00.
Falls zumindest ein Kriterium, bevorzugt alle Kriterien, erfüllt sind, wird der Kanal als AAL2 klassifiziert. In der NSE 18 wird ein Eintrag für einen AAL2 (Basis-)-Kanal erzeugt, wobei wiederum das aktuelle Zeitsignal mitabgelegt wird. Die Weiterverarbeitung erfolgt mit Schritt h).
- f3): Nicht erfolgreiche Autokonfiguration: Falls Schritt f2) nicht erfolgreich abgeschlossen werden konnte, ist die Autokonfiguration missglückt. Ursache kann sein, dass es sich bei der gegenwärtigen Zelle um eine Zelle in der Mitte einer längeren AAL5-PDU (Protocol Data Unit) oder eine AAL2-PDU ohne gültige CID handelt. Der letzte Fall kann auftreten, wenn der Rest der Payload einer vorhergehenden Zelle in die nächste Zelle hineinreicht. In diesem Fall wird der Zelle eine vorgebbare Bezeichnung zugewiesen. Diese kann darin bestehen, das der Status unbestimmt ist, wobei zum Beispiel die Bezeichung AALy zugewiesen wird.

- g): Verarbeitung einer AAL5-Zelle:
- g1): Der NSE-Eintrag wird mit den aktuellen Daten (beispielsweise dem neu konfigurierten AAL5-Typ und/oder dem aktuellen Zeitsignal) aktualisiert;
- g2): Anschließend wird die Zelle an den DPR 24, der als Schnittstelle zu der AAL-Reassembly-Vorrichtung 26 dient, geleitet.

- h): Verarbeitung einer AAL2-Zelle:
Wird eine Zelle als AAL2-Zelle erkannt, müssen alle CIDs gefunden werden. Innerhalb einer Zelle können bis zu 12 CIDs verwendet werden. Dies erfolgt in einem zweistufigen Prozess:
- h1): Ermitteln aller CIDs:
Die Hauptzustandsmaschine 38 ermittelt die erste CID durch Auswertung des Werts des OSF-Felds. Da das OSF-Feld immer an derselben Stelle einer ATM-Zelle vom AAL2-Typ positioniert ist, kann es leicht gefunden und ausgelesen werden. Damit lässt sich die erste CID ermitteln und eine Abfrage PHY/VPI/VCI/CID1 an die NSE 18 richten. Nachfolgende CIDs werden aufgefunden, indem das LI-Feld der ersten CID ausgelesen wird, welches die Länge der zur ersten CID gehörenden Daten angibt. Dadurch kann der Offset und damit die Position der zweiten CID CID2 gefunden werden. Dabei wird der Header jeder CID einem CRC5-Check unterzogen. Nach Auffinden aller CIDs der aktuellen ATM-Zelle wird Schritt h2) ausgeführt.
- h2): Erzeuge eine Synchronisation mit der Ergebniszustandsmaschine;
Falls ein Eintrag für die jeweilige CID in der NSE gefunden werden konnte und der CRC-Check erfolgreich absolviert wurde, wird die ATM-Zelle zusammen mit der ermittelten Kanalkennung an den DPR 24 weitergeleitet. Außerdem wird der entsprechende Eintrag in der NSE mit dem aktuellen Zeitsignal upgedated. Falls die Abfrage keinen Eintrag ergeben hat, wird eine neue Kanalkennung CH für diese CID kreiert und ein entsprechender Eintrag in die NSE gemacht; zusätzlich wird das zugehörige Zeitsignal in der NSE 18 abgelegtl. Genaueres zum Zeitsignal wird nachfolgend mit Bezug auf Figur 6 ausgeführt werden.

- i): 2. Schritt der Autokonfiguration für AALy:
Zunächst wird eine Prüfung gemäß den Schritten f1) und f2) durchgeführt. Falls jetzt AAL5 eindeutig gefunden wird, wird AAL Typ 5 konfiguriert. Falls jetzt AAL2 eindeutig gefunden wird, wird AAL Typ 2 konfiguriert. Falls weder AAL2 noch AAL5 gefunden wird, bleibt es beim Typ AALy.

Figur 5 zeigt in schematischer Darstellung das Prinzip der Abfrage an den CAM-Speicher der NSE 18. In einem Register 52 sind die Daten wiedergegeben, deren Vorhandensein in der Tabelle 54 ermittelt werden soll. In dem Register 52 kann eine unterschiedliche Auswahl der angegebenen Elemente als Abfragemaske definiert werden, beispielsweise PHY/VPl/VCl, PHY/VPl/VCl/AAL, PHY/VPl/VCl/CID, Timer, etc.. Die für das Register 52 verwendeten Abkürzungen sind selbstverständlich in der realen Abfrage durch entsprechende Werte ersetzt. Die Kanalkennung CH der ermittelten Einträge wird am Ausgang 56 der Tabelle 54 bereitgestellt. Wird für die durch das Register 52 spezifizierte Abfrage kein Eintrag ermittelt, wird ein entsprechendes Signal am Ausgang 56 der Tabelle 54 bereitgestellt, z.B. CH = 0.

Mit Bezug auf Figur 6 wird im Nachfolgenden die Realisierung eines Timers wiedergegeben, der die permanente Überwachung der Übertragung auf ATM-Kanälen an der Schnittstelle ermöglicht, obwohl die Speicherkapazitäten des CAM-Speichers naturgemäß begrenzt sind. Dazu muss ein Timeout-Signal, d. h. ein Löschsignal, für die Kanäle erzeugt werden, für die in der NSE 18 ein Eintrag vorhanden ist, die jedoch innerhalb eines vorgegebenen Zeitraums nicht upgedated wurden und die daher zu löschen sind. Dabei wird nach jeder Zeitdauer Δt der Zählerstand im Register 58 um 1 erhöht. Vorliegend handelt es sich um einen 3-Bit-Zähler. Ist der Maximalwert erreicht (111), so setzt der Zähler beim nächsten Takt mit dem Wert 000 fort. Ein Eintrag im Register 58 wird als Zeitsignal in der im CAM-Speicher abgelegten Tabelle erfasst. Im Register 60 ist der im Register 58 erfasste Zählerstand minus 1 wiedergegeben. Unter Verwendung dieses im Register 60 wiedergegebenen Zählerstands kann zu vorgegebenen Zeitpunkten eine Abfrage, siehe Figur 5, an die Tabelle 54 gerichtet werden, um alle die Einträge zu ermitteln, die den Zählerstand im Register 60 als Zeitsignal in der Spalte "Timer" eingetragen haben, um diese zu löschen. Dies sind nämlich die ältesten in der Tabelle 54 erfassten Einträge, für die am längsten kein Update mehr stattgefunden hat.

## Patentansprüche

1. Verfahren zum Ermitteln mindestens eines Übertragungsparameters an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanäten stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird,
wobei in jeder ATM-Zelle eine Adressinformation mit zumindest einem ersten Adressidentifikator übertragen wird, die die Zugehörigkeit zu einem bestimmten ATM-Kanal anzeigt, und wobei die ATM-Zelle gemäß einer bestimmten Kodierungsvorschrift für den ATM Adaption Layer aus einer vorgebbaren Anzahl von Kodierungsvorschriften für den ATM Adaption Layer kodiert ist, folgende Schritte umfassend:
a) für eine bestimmte ATM-Zelle: Ermitteln der Adressinformation;
b) anhand einer Tabelle (54), in der jede Adressinformation auf eine Kanalkennung (CH) abgebildet ist: Überprüfen, ob die Adressinformation bereits in der Tabelle (54) erfasst ist;
b1) falls die Adressinformation bereits in der Tabelle (54) erfasst ist:
- Zuweisen der Kanalkennung (CH) gemäß Tabelle (54) an die ATM-Zelle zur Weiterverarbeitung;
b2) falls die Adressinformation in der Tabelle (54) noch nicht erfasst ist:
- Zuweisen einer freien Kanalkennung (CH) an die Adressinformation;
- Ermitteln des zur Kodierung der ATM-Zelle verwendeten Kodierungsvorschrift;
- Erfassen dieser Kanalkennung (CH), der Adressinformation und der Kodierungsvorschrift in der Tabelle (54);
c) Bereitstellen der ATM-Zellen geordnet nach Kanalkennungen (CH) für eine Weiterverarbeitung;
**dadurch gekennzeichnet,**
**dass** zum Ermitteln der Kodierungsvorschrift folgende Schritte ausgeführt werden:
d) Ermitteln des Payload-Type-Identifiers PTI:
d1) falls der Payload-Type-Identifier PTI gleich "001" oder "011" ist:
- Zuweisen der Kodierungsvorschrift AAL5;
d2) falls der Payload-Type-Identifier PTI gleich "000" ist:
- Annahme der Kodierungsvorschrift AAL2;
- Überprüfung auf Erfülltsein zumindest eines Kriteriums für AAL2;
d21) falls das zumindest eine Kriterium für AAL2 erfüllt ist:
- Zuweisen der Kodierungsvorschrift AAL2;
d22) falls das zumindest eine Kriterium für AAL2 nicht erfüllt ist;
- Zuweisen einer vorgebbaren Bezeichnung (AALy).

2. Verfahren nach Anspruch 1,
**dadurch gekennzeichnet,**
**dass** das Kriterium in Schritt d21) eines oder mehrere aus folgender Auswahl sind:
- der CRC5-Check über die erste, durch das OSF-Feld bestimmte CID ist gültig;
- der Paritäts-Check über das OSF-Feld ist gültig;
- der Wert des UUI-Felds der ersten CID ist kleiner als 27;
- das erste CID-Feld ist nicht gleich 0x00.

3. Verfahren nach einem der Ansprüche 1 oder 2,
**dadurch gekennzeichnet,**
**dass** im Falle von Schritt d21) folgende Schritte ausgeführt werden:
d211) Auslesen des OSF-Felds der aktuellen ATM-Zelle;
d212) Auslesen der ersten CID;
d213) Auslesen des ersten LI-Felds und Ermitteln eines neuen Offset-Werts;
d214) Auslesen der durch den Offset-Wert angegebenen Daten und Prüfung, ob es sich um eine zweite CID handelt;
d215) Sofern diese zweite CID nicht vorhanden ist: Beendigung der Analyse der aktuellen ATM-Zelle;
Sofern diese zweite CID vorhanden ist: Ermitteln des nächsten Offset-Werts und Auslesen der nächsten CID;
d216) Wiederholen der Schritte d214) und d215) bis alle CIDs der aktuellen ATM-Zelle gefunden sind.

4. Verfahren nach einem der Ansprüche 1 bis 3,
**dadurch gekennzeichnet,**
**dass** die Tabelle (54) als NSE (18) realisiert wird, wobei der gefundene AAL Typ zusammen mit der Kanalkennung (CH) und der Adressinformation in der NSE (18) gespeichert wird.

5. Vorrichtung zum Ermitteln mindestens eines Übertragungsparameters an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanälen stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird,
wobei in jeder ATM-Zelle eine Adressinformation mit zumindest einem ersten Adressidentifikator übertragen wird, die die Zugehörigkeit zu einem bestimmten ATM-Kanal anzeigt, und wobei die ATM-Zelle gemäß einer bestimmten Kodierungsvorschrift für den ATM Adaption Layer aus einer vorgebbaren Anzahl von Kodierungsvorschriften für den ATM Adaption Layer kodiert ist, umfassend:
a) Mittel zum Ermitteln der Adressinformation für eine bestimmte ATM-Zelle;
b) Mitteln zum Überprüfen anhand einer Tabelle (54), in der jede Adressinformation auf eine Kanalkennung (CH) abgebildet ist, ob die Adressinformation bereits in der Tabelle (54) erfasst ist;
b1) Mitteln zum Zuweisen der Kanalkennung (CH) gemäß der Tabelle (54) an die ATM-Zelle zur Weiterverarbeitung, falls die Adressinformation bereits in der Tabelle (54) erfasst ist;
b2) Mitteln zum Zuweisen einer freien Kanalkennung (CH) an die Adressinformation;
Mitteln zum Ermitteln der zur Kodierung der ATM-Zelle verwendeten Kodierungsvorschrift; und
Mitteln zum Erfassen dieser Kanalkennung (CH), der Adressinformation und der Kodierungsvorschrift in der Tabelle (54),
falls die Adressinformation in der Tabelle (54) noch nicht erfasst ist:
c) Mitteln zum Bereitstellen der ATM-Zellen geordnet nach Kanalkennungen (CH) für eine Weiterverarbeitung;
**dadurch gekennzeichnet,**
**dass** die Mittel zum Ermitteln der Kodierungsvorschrift umfassen:
d) Mitteln zum Ermitteln des Payload-Type-Identifiers PTI:
d1) Mittel zum Zuweisen der Kodierungsvorschrift AAL5, falls der Payload-Type-Identifier PTI gleich 1 ist;
d2) Mitteln zur Annahme der Kodierungsvorschrift AAL2; und
Mittel zur Überprüfung auf Erfülltsein mindestens eines Kriteriums für AAL2,
falls der Payload-Type-Identifier PTI gleich "000" ist;
wobei weiterhin folgende Mittel vorgesehen:
d21) Mittel zum Zuweisen der Kodierungsvorschrift AAL2, falls das zumindest eine Kriterium für AAL2 erfüllt ist;
d22) Mittel zum Zuweisen einer vorgebbaren Bezeichnung, falls das zumindest eine Kriterium für AAL2 nicht erfüllt ist.

## Claims

1. Method for determining at least one transmission parameter at an interface arranged between a first and a second node of a transmission system, whereby at the interface there occurs a plurality of transmissions on a plurality of ATM channels, wherein continually open ATM channels are closed after completion of the associated transmission and new ATM channels are opened at the start of a new transmission, wherein on each ATM channel there is transmitted a sequence of ATM cells,
wherein in each ATM cell there is transmitted an address information having at least one first address identifier, which shows the affiliation with a specific ATM channel, and wherein the ATM cell is encoded in accordance with a specific encoding rule for the ATM Adaption Layer from a predeterminable number of encoding rules for the ATM Adaption Layer, comprising the following steps:
a) for a specific ATM cell: determining the address information;
b) on the basis of a table (54) in which each address information is mapped onto a channel ID (CH): verifying, whether the address information has already been recorded in the table (54);
b1) in case the address information has already been recorded in the table (54):
- assigning of the channel ID (CH) according to the table (54) to the ATM cell for further processing;
b2) in case the address information has not yet been recorded in the table (54):
- assigning a free channel ID (CH) to the address information;
- determining the encoding rule used for encoding the ATM cell;
- recording said channel ID (CH), the address information and the encoding rule in the table (54);
c) providing the ATM cells, in an order according to channel IDs (CH), for further processing;
**characterised in that**
for determining the encoding rule, the following steps are performed:
d) determining the Payload Type Identifier PTI:
d1) in case the Payload Type Identifier PTI equals "001" or "011":
- assigning the encoding rule AAL5;
d2) in case the Payload Type Identifier PTI equals "000":
- assuming the encoding rule AAL2;
- checking for fulfilment of at least one criterion for AAL2;
d21) in case the at least one criterion for AAL2 is fulfilled:
- assigning the encoding rule AAL2;
d22) in case the at least one criterion for AAL2 is not fulfilled;
- assigning a predeterminable designation (AALy).

2. Method according to claim 1,
**characterised in that**
the criterion in step d21) are one or several of the following selection:
- the CRC5 check across the first CID determined by the OSF field is valid;
- the parity check across the OSF field is valid;
- the value of the UUI field of the first CID is smaller than 27;
- the first CID field does not equal 0x00.

3. Method according to one of claims 1 or 2,
**characterised in that**
in the case of step d21) the following steps are performed:
d211) reading out OSF the field of the current ATM cell;
d212) reading out the first CID;
d213) reading out the first Li field and determining a new offset value;
d214) reading out the data given by the first offset value and checking whether it is a second CID;
d215) if said second CID does not exist: terminating the analysis of the current ATM cell;
if said second CID does exist: determining the next offset value and reading out the next CID;
d216) repeating steps d214) and d215) until all CIDs of the current ATM cell have been found.

4. Method according to one of claims 1 to 3,
**characterised in that**
the table (54) is realised as an NSE (18), whereby the AAL type found is stored in the NSE (18) together with the channel ID (CH) and the address information.

5. Device for determining at least one transmission parameter at an interface arranged between a first and a second node of a transmission system,
wherein at the interface there occurs a plurality of transmissions on a plurality of ATM channels, wherein continually open ATM channels are closed after completion of the associated transmission and new ATM channels are opened at the start of a new transmission, whereby on each ATM channel there is transmitted a sequence of ATM cells,
wherein in each ATM cell there is transmitted an address information having at least one first address identifier, which shows the affiliation with a specific ATM channel, and wherein die ATM cell is encoded in accordance with a specific encoding rule for the ATM Adaption Layer from a predeterminable number of encoding rules for the ATM Adaption Layer, comprising:
a) means for determining the address information for a specific ATM cell;
b) means for verifying on the basis of a table (54), in which each address information is mapped onto a channel ID (CH), whether the address information has already been recorded in the table (54);
b1) means for assigning the channel ID (CH) according to the table (54) to the ATM cell for further processing, in case the address information has already been recorded in the table (54);
b2) means for assigning a free channel ID (CH) to said address information;
means for determining the encoding rule used for encoding the ATM cell; and
means for recording said channel ID (CH), the address information and the encoding rule in the table (54),
in case the address information has not yet been recorded in the table (54):
c) means for providing the ATM cells, in an order according to the channel IDs (CH), for further processing;
**characterised in that**
the means for determining the encoding rule comprise:
d) means for determining the Payload Type Identifier PTI:
d1) means for assigning the encoding rule AAL5, in case the Payload Type Identifier PTI equals 1;
d2) means for assuming the encoding rule AAL2; and
means for checking for fulfilment of at least one criterion for AAL2,
in case the Payload Type Identifier PTI equals "000";
wherein, furthermore, the following means are envisaged:
d21) means for assigning the encoding rule AAL2, in case the at least one criterion for AAL2 is fulfilled;
d22) means for assigning a predeterminable designation, in case the at least one criterion for AAL2 is not fulfilled.

## Revendications

1. Procédé de détermination d'au moins un paramètre de transmission dans une interface disposée entre un premier et un deuxième noeud d'un système de transmission, de multiples transmissions s'effectuant par de multiples canaux ATM à l'interface, des canaux ATM ouverts continuellement étant fermés après achèvement de la transmission correspondante et de nouveaux canaux ATM étant ouverts lors du début d'une nouvelle transmission, une suite de cellules ATM étant transmise par chaque canal ATM, une information d'adresse avec au moins un premier identificateur d'adresse étant transmise dans chaque cellule ATM indiquant l'appartenance à un certain canal ATM, la cellule ATM étant codée selon une prescription de codage précise pour la couche d'adaptation ATM parmi un nombre prescriptible de prescriptions de codage pour la couche d'adaptation ATM, comprenant les étapes suivantes :
a) pour une cellule ATM précise : détermination de l'information d'adresse ;
b) selon une table (54) dans laquelle chaque information d'adresse est calquée sur une identification de canal (CH) : vérification de ce que l'information d'adresse est déjà inscrite dans la table (54) ;
b1) si l'information d'adresse est déjà inscrite dans la table (54) :
- affectation à la cellule ATM pour traitement ultérieur de l'identification de canal (CH) selon la table (54) ;
b2) si l'information d'adresse n'est pas encore inscrite dans la table (54) :
- affectation à l'information d'adresse d'une identification de canal (CH) libre ;
- détermination de la prescription de codage utilisée pour le codage de la cellule ATM ;
- inscription dans la table (54) de cette identification de canal (CH) de l'information d'adresse et de la prescription de codage ;
c) mise à disposition pour un traitement ultérieur des cellules ATM ordonnées selon les identifications de canal (CH) ;
**caractérisé en ce que**,
les étapes suivantes sont parcourues pour déterminer la prescription de codage :
d) détermination de l'identificateur de type de données utiles PTI :
d1) si l'identificateur de type de données utiles PTI est égal à «001 » ou «011» :
- affectation de la prescription de codage AAL5 ;
d2) si l'identificateur de type de données utiles PTI est égal à « 000 » :
- on admet la prescription de codage AAL2 ;
- vérification de la concordance avec au moins un critère pour AAL2 ;
d21) si ledit au moins un critère pour AAL2 est vérifié :
- affectation de la prescription de codage AAL2 ;
d22) si ledit au moins un critère pour AAL2 n'est pas vérifié :
- affectation d'une désignation prescriptible (AALy).

2. Procédé selon la revendication 1,
**caractérisé en ce que**
le critère de l'étape d21) est un ou plusieurs éléments du choix suivant :
- la vérification CRC5 par le premier CID défini par le champ OSF est valide ;
- la vérification de parité par le champ OSF est valide ;
- la valeur du champ UUI du premier CID est inférieure à 27 ;
- le premier CID est différent de 0x00.

3. Procédé selon l'une quelconque des revendications 1 ou 2,
**caractérisé en ce que**
dans le cas de l'étape d21), les étapes suivantes sont parcourues :
d211) lecture du champ OSF de la cellule ATM actuelle ;
d212) lecture du premier CID ;
d213) lecture du premier champ LI et détermination d'une nouvelle valeur de décalage ;
d214) lecture des données indiquées par la valeur de décalage et vérification de ce qu'il s'agit ou non d'un deuxième CID ;
d215) dans la mesure où ce deuxième CID ne figure pas : fin de l'analyse de la cellule ATM actuelle ;
dans la mesure où ce deuxième CID figure : détermination de la valeur suivante de décalage et lecture du CID suivant ;
d216) répétition des étapes d214) et d215) jusqu'à ce que tous les CID de la cellule ATM actuelle aient été trouvés.

4. Procédé selon l'une quelconque des revendications 1 à 3,
**caractérisé en ce que**
la table (54) est réalisée en tant que NSE (18), le type AAL trouvé étant stocké avec l'identification de canal (CH) et l'information d'adresse dans le NSE (18).

5. Dispositif de détermination d'au moins un paramètre de transmission dans une interface disposée entre un premier et un deuxième noeud d'un système de transmission, de multiples transmissions s'effectuant par de multiples canaux ATM à l'interface, des canaux ATM ouverts continuellement étant fermés après achèvement de la transmission correspondante et de nouveaux canaux ATM étant ouverts lors du début d'une nouvelle transmission, une suite de cellules ATM étant transmise par chaque canal ATM,
une information d'adresse avec au moins un premier identificateur d'adresse étant transmise dans chaque cellule ATM indiquant l'appartenance à un certain canal ATM, la cellule ATM étant codée selon une prescription de codage précise pour la couche d'adaptation ATM parmi un nombre prescriptible de prescriptions de codage pour la couche d'adaptation ATM, comprenant :
a) un moyen de détermination de l'information d'adresse pour une cellule ATM précise ;
b) des moyens de vérification selon une table (54) dans laquelle chaque information d'adresse est calquée sur une identification de canal (CH) de ce que l'information d'adresse est déjà inscrite dans la table (54) ;
b1) des moyens d'affectation à la cellule ATM pour traitement ultérieur de l'identification de canal (CH) selon la table (54) si l'information d'adresse est déjà inscrite dans la table (54) ;
b2) des moyens d'affectation à l'information d'adresse d'une identification de canal (CH) libre ;
des moyens de détermination de la prescription de codage utilisée pour le codage de la cellule ATM ; et
des moyens d'inscription dans la table (54) de cette identification de canal (CH), de l'information d'adresse et de la prescription de codage,
si l'information d'adresse n'est pas encore inscrite ;
c) des moyens de mise à disposition pour un traitement ultérieur des cellules ATM ordonnées selon les identifications de canal (CH) ;
**caractérisé en ce que**,
les moyens de détermination de la prescription de codage comprennent :
d) des moyens de détermination de l'identificateur de type de données utiles PTI ;
d1) un moyen d'affectation de la prescription de codage AAL5 si l'identificateur de type de données utiles PTI est égal à 1 ;
d2) des moyens pour admettre la prescription de codage AAL2 ; et un moyen de vérification de la concordance avec au moins un critère pour AAL2
si l'identificateur de type de données utiles PTI est égal à « 000 » ; le moyen suivant étant en outre prévu :
d21) un moyen d'affectation de la prescription de codage AAL2 si ledit au moins un critère pour AAL2 est vérifié :
d22) un moyen d'affectation d'une désignation prescriptible si ledit au moins un critère pour AAL2 n'est pas vérifié.
